# EUROPÄISCHE PATENTANMELDUNG

(11) **EP 1 048 873 A1**
(43) Veröffentlichungstag der Anmeldung: **02.11.2000**
(21) Anmeldenummer: 00112668.9
(22) Anmeldetag: 15.05.1996
(51) Int. Cl.: F16D 65/12, F16D 66/02

(54) **Bremsscheibe**

(62) Teilanmeldung aus: 96916083.7
(71) Anmelder: Continental Teves AG & Co. oHG, 60488 Frankfurt (DE)
(72) Erfinder: Veith, Christoph, 61476 Kronberg (DE); Beer, Wilhelm, 65428 Rüsselsheim (DE); Gehrig, Horst, 65719 Hofheim/Ts (DE)

(57) **Zusammenfassung**

Bei einer Bremsscheibe (1) für Scheibenbremsen ist zumindest eine Reibfläche (4) mit zumindest einer Nut (6) versehen, wobei beide Enden (21, 22) von jeder Nut (13 bis 16) in den äußeren Rand (18) der Bremsscheibe (1) münden. Dies gestattet eine sehr funktionelle Herstellung der Nuten.

## Beschreibung

Die Erfindung betrifft eine Bremsscheibe für Scheibenbremsen, bei der zumindest eine Reibfläche mit zumindest einer Nut versehen ist.

Derartige Bremsscheiben sind bereits bekannt. Die in die Reibflächen der Bremsscheiben eingebrachten Nuten dienen einerseits zur Verbesserung der Kühlung der Bremsscheibe durch Erhöhung der Kühlfläche und besserer Verwirbelung der Kühlluft und andererseits zur Verbesserung des Ansprechens der Bremse bei nasser Bremsscheibe, da auf der Bremsscheibe befindliches Wasser in den Nuten aufgenommen werden kann. Ein anderer Vorteil der Nuten besteht darin, daß man sie als Verschleißanzeige benutzen kann. Aus der DB 40 02 695 A1 ist eine derartige Bremsscheibe mit dekorativ angeordneten Nuten in den Reibflächen bekannt. Wenn die Bremsscheibe um einen Betrag abgeschliffen ist, der der Nuttiefe entspricht, so verschwinden die Nuten. Dies ermöglicht eine einfache Sichtkontrolle von außen. Wenn die Nuten nicht mehr sichtbar sind, muß die Bremsscheibe gegen eine neue ausgetauscht werden.

Die bekannten Bremsscheiben haben jedoch den Nachteil, daß die Strukturen der Nuten nur durch einen kostenaufwendigen Arbeitsgang eingebracht werden können. Im allgemeinen erfolgt die Bearbeitung eines Bremsscheibenrohlings derart; daß zuerst die Reibflächen in einer ersten Bearbeitungsmaschine geglättet werden. Danach muß die Bremsscheibe aus der ersten Bearbeitungsmaschine herausgenommen und in einem zweiten Schritt für das Einbringen der Nuten in eine Fräsmaschine eingespannt werden. Die Nuten werden dann bei nicht rotierender starrer Bremsscheibe mit der Fräsmaschine eingebracht, wobei der Fräser eine komplizierte zweidimensionale Bewegung durchführen muß.

Aufgabe der Erfindung ist es, eine verbesserte Bremsscheibe für Scheibenbremsen anzugeben, deren Fertigung insbesondere im Hinblick auf das Einbringen der Nuten kostengünstiger gestaltet werden kann.

Die Lösung der Aufgabe ergibt sich aus der Merkmalskombination des Patentanspruchs 1. Im Prinzip besteht die Lösung darin, daß der Verlauf der Nut über die Reibfläche an die Erfordernisse einer einfachen Fertigung angepaßt ist. Um die erfindungsgemäße Nut zu erzeugen, braucht das spanabhebender Werkzeug nicht in einer komplizierten zweidimensionalen Bewegung geführt zu werden, sondern es genügt eine eindimensionale Hubbewegung in Kombination mit einer Rotationsbewegung der Bremsscheibe. Die erfindungsgemäße Form der Nut erlaubt eine Bearbeitung der Nut in einem einzigen Durchgang, ohne daß das Bearbeitungswerkzeug abgesetzt und wieder angesetzt werden müßte. Daraus ergibt sich eine erhebliche Zeitersparnis und wegen der dadurch bedingten besseren Auslastung der Fertigungsmaschinen auch eine erhebliche Kostenersparnis.

Eine bevorzugte Variante der Erfindung geht davon aus, daß das vorteilhafte Verfahren zum Einbringen der Nuten auch dann angewandt werden kann, wenn die durch die Rotationsbewegung der Bremsscheibe und die Hubbewegung des spanabhebenden Werkzeugs erzeugte Bahnform für die Nut einen größeren radialen Erstreckungsbereich hat als die zugehörige Reibfläche der Bremsscheibe. In diesem Fall ergibt sich keine geschlossene Form der Nut innerhalb der Reibfläche, sondern die Bahn des spanabhebenden Werkzeugs verläßt im Verlauf der Bewegung den radialen Bereich der Reibfläche nach außen, um dann wieder radial von außen nach innen in die Reibfläche einzutauchen. Dabei wird die Nut im allgemeinen in mehrere Nuten unterteilt, wobei jede Nut mit ihren beiden Enden in den äußeren Rand der Bremsscheibe mündet.

Jede Nut kann mit Vorteil zwischen dem äußeren und inneren Randbereich der Reibfläche wellenförmig oder bogenförmig angeordnet sein, um den gesamten radialen Bereich der Reibfläche zu überstreichen. In einer bevorzugten Ausführungsform sind vier gleichmäßig über den Umfang der Bremsscheibe verteilte, kreisbogenförmige Nuten vorgesehen, die auf besonders einfache Weise herstellbar sind.

Ferner wird auch für ein Verfahren für die Bearbeitung von Reibflächen einer Bremsscheibe um Schutz ersucht. Mit Vorteil kann die Bremsscheibe in derselben Maschine, die auch die Reibflächen glättet, mit der erfindungsgemäßen Nut versehen werden, so daß ein Ausspannen der Bremsscheibe aus der einen Maschine und ein Einspannen in die andere zum Einbringen der Nut mit Vorteil entfallen kann. Die Bremsscheibe bleibt einfach in derselben Maschine eingespannt.

Das zum Einbringen der Nut bestimmte Werkzeug erzeugt aufgrund seines Profils die Nutkontur und aufgrund seiner Hubbewegung in Kombination mit der Rotationsbewegung der Bremsscheibe die Verlaufsform der Nut. Dabei kann das spanabhebende Werkzeug ein Fräser sein, der die Nutkontur erzeugt und die entsprechende Hubbewegung ausführt. In einer bevorzugten Ausführungsform des Verfahrens wird als spanabhebendes Werkzeug jedoch ein Formstahl mit der Nutkontur verwendet, so daß die Nut durch eine Drehoperation erzeugt wird. Bei dieser Ausführungsform ist das Werkzeug besonders einfach und kostengünstig ausgestaltet.

In einer einfachen Ausführungsform der erfindungsgemäßen Bremsscheibe weist jede Reibfläche genau eine Nut auf, die zwischen dem radial inneren und äußeren Randbereich der Reibfläche wellenförmig oder bogenförmig verläuft. Durch diesen Verlauf wird sichergestellt, daß sich die Nut über den gesamten radialen Bereich der Reibfläche erstreckt, was insbesondere der wasseraufnehmenden Wirkung bei nasser Bremsscheibe zugute kommt. Andererseits kann die Wellen- bzw. Bogenform auf besonders einfache Weise durch die genannte Hubbewegung des spanabhebenden Werkzeugs bei der Fertigung erzeugt werden. Je nach Rotationsgeschwindigkeit der Bremsscheibe bei der Fertigung kann sich dabei- jedoch die Notwendigkeit einer hohen Frequenz für die Hubbewegung des spanabhebenden Werkzeugs ergeben, die Nachteile mit sich bringen könnte.

Eine weitere Möglichkeit zur Reduzierung der Hubfrequenz des spanabhebenden Werkzeugs besteht darin, daß jede Reibfläche zwei oder mehrere Nuten aufweist, die zwischen dem radial inneren und äußeren Randbereich der Reibfläche wellenförmig oder bogenförmig verlaufen und in Drehrichtung der Bremsscheibe versetzt zueinander angeordnet sind. Jede der Nuten kann mit einer geringen Hubfrequenz erzeugt werden, während trotzdem die Dichte der über die Reibfläche verteilten Nutabschnitte höher ist als mit nur einer einzigen Nut derselben Hubfrequenz. Die Fertigung kann auch hier mit dem bereits genannten Verfahren erfolgen, indem die zwei oder mehreren Nuten zeitlich hintereinander von demselben spanabhebenden Werkzeug eingebracht werden.

Wenn jedoch der zeitliche Mehraufwand für die Fertigung mehrerer Nuten wirtschaftlich ungünstiger ist als ein apparati-. ver Mehraufwand der Fertigungsmaschine, so empfiehlt sich ein Bearbeitungsverfahren, nach dem zwei oder mehrere Nuten von zwei oder mehreren spanabhebenden Werkzeugen gleichzeitig in dieselbe Reibfläche eingebracht werden.

Ein derartiges Verfahren eignet sich insbesondere auch für eine Bremsscheibe, die je Reibfläche zwei oder mehrere Nuten aufweist, die in einem radialen Teilbereich der Reibfläche wellenförmig oder bogenförmig verlaufen und in radialer Richtung zueinander versetzt angeordnet sind. Bei einer solchen Anordnung der Nuten ist zwar nicht die Hubfrequenz jedoch die Hublänge für das spanabhebende Werkzeug reduziert, so daß auch bei erhöhter Frequenz keine unzulässig hohen Beschleunigungen des Werkzeugs auftreten.

In, einer Weiterbildung des Verfahrens zum Einbringen der Nut ist vorgesehen, daß beide Reibflächen der Bremsscheibe gleichzeitig bearbeitet und mit Nuten versehen werden. Für diesen Zweck muß die Bearbeitungsmaschine mit paarweise gegenüberliegend angeordneten spanabhebenden Werkzeugen versehen sein. Wenn auf jeder Reibfläche beispielsweise zwei Nuten vorgesehen sind, so braucht man insgesamt vier spanabhebende Werkzeuge, von denen jeweils zwei paarweise angeordnet sind.

Ausführungsbeispiele der Erfindung werden nachfolgend anhand der Zeichnungen näher erläutert.

Es zeigen:
- Figur 1: eine Draufsicht auf eine dem Stand der Technik nach FR-A-1 527 763 vergleichbare Bremsscheibe in einer ersten Ausführungsform,
- Figur 2: einen Schnitt durch dieselbe Bremsscheibe,
- Figur 3: einen vergrößerten Ausschnitt aus Figur 2,
- Figur 4: einen Teilschnitt gemäß Linie A-A aus Figur 1,
- Figur 5: eine Bremsscheibe in einer zweiten Ausführungsform,
- Figur 6: eine Bremsscheibe in einer dritten Ausführungsform,
- Figur 7: eine erfindungsgemäße Bremsscheibe in einer weiteren Ausführungsform.

Die dargestellten Bremsscheiben 1 aller Ausführungsbeispiele bestehen aus einem topfförmigen Halteabschnitt 2 und einem Reibring 3, der auf beiden Axialseiten jeweils eine Reibfläche 4,5 aufweist. Jede Reibfläche 4,5 ist mit zumindest einer Nut 6 bis 16 versehen, wobei die Nuten 6 bis 12 eine geschlossene Form ohne Anfang und Ende aufweisen und um die Bremsscheibenachse 17 herum verlaufen.

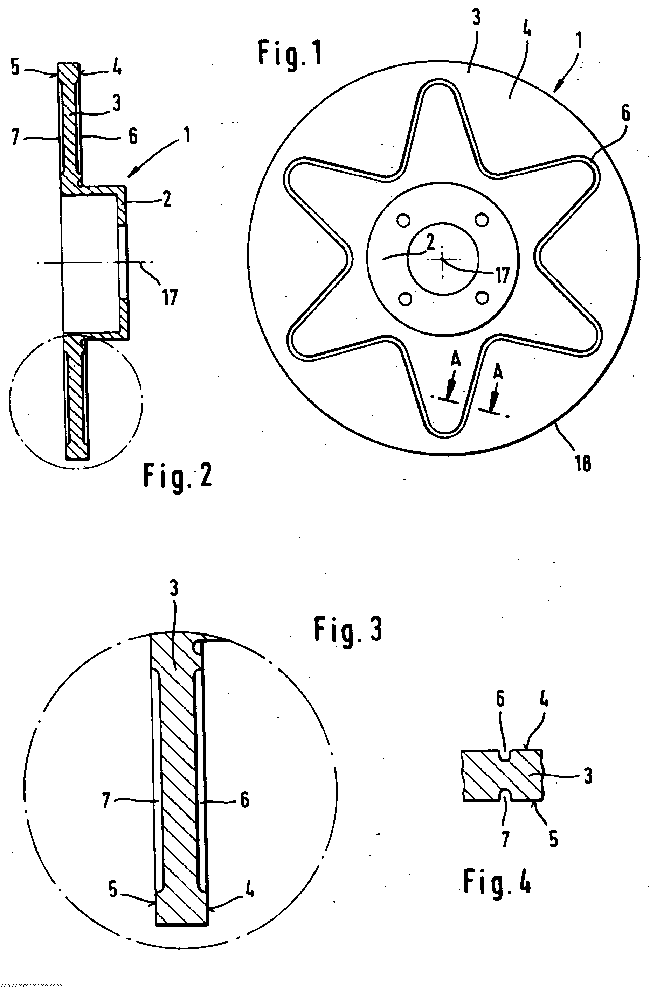

Bei dem in den Figuren 1 bis 4 gezeigten ersten Ausführungsbeispiel besitzt jede Reibfläche 4,5 jeweils genau eine Nut 6,7, die zwischen dem radial inneren und äußeren Randbereich 18 der Reibfläche 4,5 wellenförmig verläuft. Dabei ist die Nut 6,7 nach einer Umrundung der Bremsscheibenachse 17 in sich geschlossen.

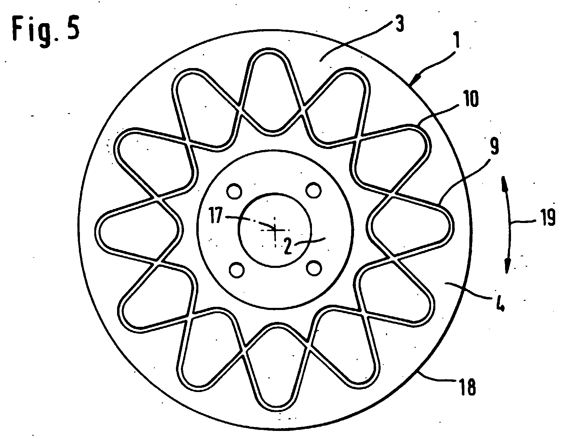

Eine weitere Möglichkeit zur Verringerung der Hubfrequenz ist in Figur 5 illustriert. Hier ist jede Reibfläche 4,5 der Bremsscheibe 1 mit zwei Nuten 9,10 versehen, die zwischen dem radial inneren und äußeren Randbereich 18 der Reibfläche 4,5 wellenförmig verlaufen und in Drehrichtung 19 der Bremsscheibe 1 versetzt zueinander angeordnet sind.

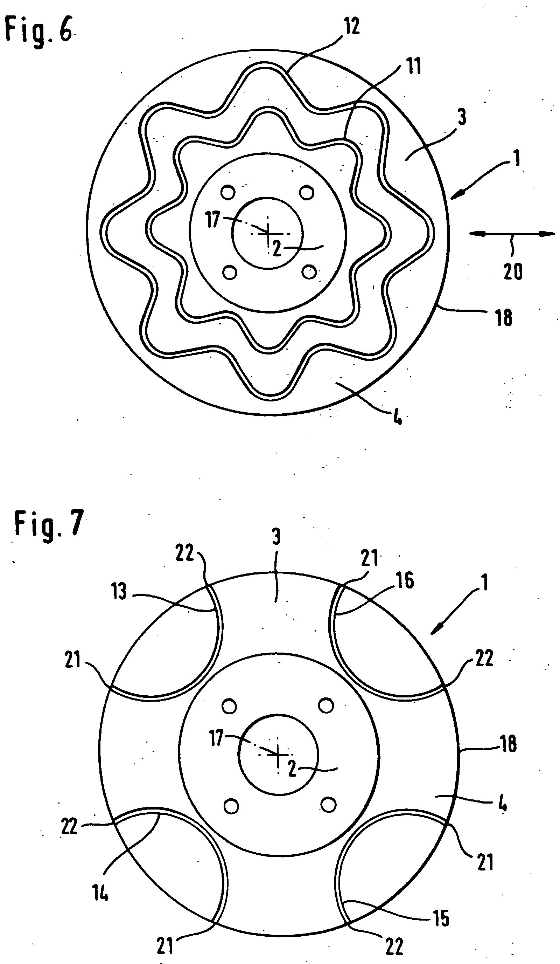

Bei der in Figur 6 gezeigten Ausführungsform besitzt jede Reibfläche 4,5 zwei Nuten 11,12 die in einem radialen Teilbereich der Reibfläche 4,5 wellenförmig verlaufen und zwischen dem radial inneren und äußeren Randbereich 18 der Reibfläche 4,5 in radialer Richtung 20 zueinander versetzt angeordnet sind. Daraus ergibt sich für die radial innere Nut 11 ein kleinerer Durchmesser und eine kleinere Länge als für die radial außen angeordnete Nut 12. Durch die Anordnung zweier Nuten 11,12 kann die Amplitude der Wellenform mit Vorteil gering gehalten werden.

Die in Figur 7 dargestellte Ausführungsform der Erfindung unterscheidet sich im wesentlichen von den oben genannten Ausführungsformen dadurch, daß jede Reibfläche 4,5 mit vier Nuten 13 bis 16 versehen ist, die jedoch nicht in sich geschlossen ausgeführt sind, sondern jeweils zwei Enden 21,22 aufweisen. Die Enden 21, 22 der Nuten 13 bis 16 münden beide jeweils in den äußeren Rand 18 der Bremsscheibe 1. Die Nuten 13 bis 16 verlaufen zwischen dem inneren und äußeren Randbereich 18 der Reibflächen 4,5 kreisbogenförmig, um die gesamte radiale Erstreckung der Reibflächen 4,5 zu überstreichen.

Die letztgenannte Ausführungsform der Erfindung hat den weiteren Vorteil, daß aufgrund der Mündung der Nuten 13 bis 16 in den Rand 18 der Bremsscheibe 1 ein Verschleiß der Bremsscheibe 1 nicht nur durch optische Kontrolle der Reibflächen 4,5, sondern auch durch optische Kontrolle des Randes 18 der Bremsscheibe 1 erfolgen kann.

Selbstverständlich kann außer der in Fig. 4 gezeigten U-förmigen Nutkontur jede andere vorteilhafte Kontur vorgesehen sein. Insbesondere wird eine V-förmige Nutkontur empfohlen, wenn sich der Reibbelagverschleiß bei U-förmiger Nutkontur als zu hoch erweisen sollte.

## Patentansprüche

1. Bremsscheibe für Scheibenbremsen, bei der zumindest eine Reibfläche (4, 5) mit zumindest einer Nut (6 bis 12) versehen ist, **dadurch gekennzeichnet,** daß beide Enden (21, 22) von jeder Nut (13 bis 16) in den äußeren Rand (18) der Bremsscheibe (1) münden.

2. Bremsscheibe nach Anspruch 1, **dadurch gekennzeichnet,** daß jede Nut (13 bis 16) zwischen dem inneren und äußeren Randbereich (18) der Reibfläche (4, 5) wellenförmig oder bogenförmig verläuft.

3. Bremsscheibe nach Anspruch 1 oder 2, **dadurch gekennzeichnet,** daß jede Reibfläche (4, 5) zwei oder mehrere Nuten (9, 10) aufweist, die zwischen dem radial inneren und äußeren Randbereich (18) der Reibfläche (4, 5) wellenförmig oder bogenförmig verlaufen und in Drehrichtung (19) der Bremsscheibe (1) versetzt zueinander angeordnet sind.

4. Bremsscheibe nach Anspruch 1 oder 2, **dadurch gekennzeichnet,** daß jede Reibfläche (4, 5) zwei oder mehrere Nuten (11, 12) aufweist, die in einem radialen Teilbereich der Reibfläche (4, 5) wellenförmig oder bogenförmig verlaufen und zwischen dem radial inneren und äußeren Randbereich (18) der Reibfläche (4, 5) in radialer Richtung (20) zueinander versetzt angeordnet sind.

5. Bremsscheibe nach Anspruch 1 oder 2, **dadurch gekennzeichnet,** daß vier gleichmäßig über den Umfang der Bremsscheibe (1) verteilte, kreisbogenförmige Nuten (13 bis 16) vorgesehen sind.

6. Bremsscheibe nach einem der vorhergehenden Ansprüche, **dadurch gekennzeichnet**, daß die Nut (13 bis 16) die gesamte radiale Erstreckung der Reibfläche (4, 5) überstreicht.

7. Verfahren für die Bearbeitung von Reibflächen (4, 5) einer Bremsscheibe (1) nach einem der vorhergehenden Ansprüche, wobei die unbearbeitete Bremsscheibe (1) in eine Maschine eingespannt wird, die in einem ersten Bearbeitungsschritt unter Rotation der Bremsscheibe (1) die Reibflächen (4, 5) glättet, **dadurch gekennzeichnet,** daß die Bremsscheibe (1) für das Einbringen zumindest einer Nut (6 bis 16) in der Maschine eingespannt bleibt und daß die Nut (6 bis 16) mittels eines spanabhebenden, die Nutkontur aufweisenden Werkzeugs in zumindest eine Reibfläche (4, 5) eingebracht wird, in dem das Werkzeug lediglich eine Hubbewegung ausführt, die mit einer Rotationsbewegung der Bremsscheibe (1) zusammenwirkt, um den gewünschten Verlauf der Nut (6 bis 16) zu erzeugen.

8. Verfahren nach Anspruch 7, **dadurch gekennzeichnet,** daß als spanabhebendes Werkzeug ein Fräser verwendet wird, der die Nutkontur erzeugt.

9. Verfahren nach Anspruch 7, **dadurch gekennzeichnet,** daß als spanabhebendes Werkzeug ein Formstahl mit der Nutkontur verwendet wird und daß die Nut durch eine Drehoperation erzeugt wird. .

10. Verfahren nach einem der Ansprüche 7 bis 9, **dadurch gekennzeichnet,** daß zwei oder mehrere Nuten (9 bis 16) von zwei oder mehreren spanabhebenden Werkzeugen gleichzeitig in dieselbe Reibfläche (4) eingebracht werden.

11. Verfahren nach einem der Ansprüche 7 bis 10, **dadurch gekennzeichnet,** daß beide Reibflächen (4, 5) der Bremsscheibe (1) von einer der Gesamtzahl der Nuten (6 bis 16) entsprechenden Zahl von paarweise angeordneten spanabhebenden Werkzeugen gleichzeitig bearbeitet werden.
